# EUROPEAN PATENT APPLICATION

(11) **EP 3 633 821 A1**
(43) Date of publication of application: **08.04.2020**
(21) Application number: 18806799.5
(22) Date of filing: 24.05.2018
(51) Int. Cl.: H02J 15/00, H01L 49/02, H02J 7/00

(54) **METHOD USING MAGNETIC ENERGY CHIP TO STORE ELECTRIC ENERGY**

(30) Priority: 26.05.2017 CN 201710387767
(71) Applicant: M2E (Shanghai) Industrial Development Co., Ltd., Shanghai 200433 (CN)
(72) Inventor: WANG, Yuchun, Shanghai 200433 (CN); WANG, Bobo, Shanghai 200433 (CN); YAN, Pinru, Shanghai 200433 (CN)
(74) Representative: Martegani, Franco
(86) International application number: PCT/CN2018/088106
(87) International publication number: WO 2018/214923

(57) **Abstract**

A method for storing electric energy in a magnetic energy chip includes: providing an activation device including a DC voltage source, sockets and a control unit, and the sockets including a first group of sockets and a second group of sockets; mating a first group of pins of a magnetic capacitor with the first group of sockets of the activation device, and mating a second group of pins of the magnetic capacitor with the second group of sockets of the activation device; setting activation parameters; and performing an activation operation. According to the present invention, the magnetic capacitor is activated through the activation device, a short period of time is consumed, and the obtained magnetic energy chip can satisfy the user's energy demands within a certain period of time.

## Description

### TECHNICAL FIELD

The disclosure relates to the technical field of electric energy storage, and specifically to a method for storing electric energy in a magnetic energy chip.

### BACKGROUND

In modern society, energy storage components can be seen everywhere, for example, a capacitor in a circuit and a battery-like component for use in a portable device. However, there are some problems with conventional energy storage components, for example, an overall performance of a capacitive element decreases on account of a leakage current, and the overall performance of a battery reduces on account of a memory effect of partial charging/discharging.

A Giant Magneto Resistance (GMR) effect is a quantum physical effect that can be observed in a structure with a thin magnetic region or thin non-magnetic region. The Giant Magneto Resistance effect shows a significant change in the response of a resistor to an externally-applied electric field from a zero-field and high-impedance state, to a high-field and low-impedance state.

The Chinese Patent Application No. 200710151597.X, entitled "Electric Energy Storage Device and Method", discloses a device for storing electric energy by using the giant magneto resistance effect. The electric energy storage device needs to be coupled to a power supply during electric energy storage, and the charging process is complicated. According to the concept of charging, a 3000 mAh mobile phone is taken as an example, the converted energy is 3000 mAh × 3.75 V = 11.25 Wh, and its actual use time is less than 10 hours, whereas white-collars generally use mobile phones for up to 15 hours each day. Therefore, the white-collars must charge the mobile phones or carry a back-up energy battery such as a portable battery, which is very inconvenient.

### SUMMARY

In view of this, embodiments of the present invention provide a method for storing electric energy in a magnetic energy chip, which by activating a magnetic capacitor via an activation device, solves the above charging problem with the electric energy storage device and the problem about inapplicability for a mass production.

According to an embodiment of the present disclosure, a method for storing electric energy in a magnetic energy chip is provided. The magnetic energy chip includes a magnetic capacitor, and the magnetic capacitor includes a substrate, and a second conductive region, a second magnetic region, a dielectric region, a first magnetic region and a first conductive region which are sequentially disposed on the substrate. The first conductive region includes a first conductive metal layer and a first group of pins, and the first conductive metal layer is connected with the first group of pins. The second conductive region includes a second conductive metal layer and a second group of pins, and the second conductive metal layer is connected with the second group of pins. The method includes: providing an activation device which includes a DC voltage source, at least two sockets and a control unit, and the at least two sockets including a first group of sockets and a second group of sockets; mating the first group of pins of the magnetic capacitor with the first group of sockets of the activation device, and mating the second group of pins of the magnetic capacitor with the second group of sockets of the activation device; setting activation parameters; performing an activation operation.

In an embodiment, the first group of pins of the magnetic capacitor includes at least one first pin, and the second group of pins of the magnetic capacitor includes at least one second pin.

In an embodiment, the first group of pins of the magnetic capacitor and the second group of pins of the magnetic capacitor have a same number of pins.

In an embodiment, the first group of sockets of the activation device includes at least one first socket, and the second group of sockets of the activation device includes at least one second socket.

In an embodiment, the first group of sockets of the activation device and the second group of sockets of the activation device have a same number of sockets.

In an embodiment, the control unit includes a voltage setting portion.

In an embodiment, the control unit includes a current setting portion and a time setting portion.

In an embodiment, the DC voltage source includes at least two output stages, and an output voltage of the at least two output stages is in a range of 0V∼500 V.

In an embodiment, the first group of sockets of the activation device is connected to a positive electrode of the DC voltage source, and the second group of sockets is connected to a negative electrode of the DC voltage source.

In an embodiment, the activation parameters include an activation voltage.

In an embodiment, the activation parameters include an activation current and an activation time.

In an embodiment, the activation voltage is in a range of 1.5V∼400 V.

In an embodiment, the activation time is in a range of 10 ms∼10 min.

In an embodiment, the activation operation includes testing a voltage between the first group of pins of the magnetic capacitor and the second group of pins of the magnetic capacitor.

According to the present invention, the magnetic capacitor is activated through the activation device, a short period of time is consumed, the obtained magnetic energy chip can satisfy the user's energy demands within a certain period of time, and charging is not needed. In addition, the power storage manner of the magnetic energy chip does not involve a redox reaction, and the magnetic energy chip does not contain a chemical electrolyte, thereby it is not apt to cause a degradation phenomenon that the electrolyte concentration in the chemical battery reduces.

### BRIEF DESCRIPTION OF DRAWINGS

FIG. 1 is a schematic diagram showing a cross section of a magnetic capacitor according to an embodiment of the present invention.
FIG. 2 is a schematic diagram of an activation device according to an embodiment of the present invention.
FIG. 3 is a flow chart showing a magnetic capacitor activation process according to an embodiment of the present invention.

### DETAILED DESCRIPTION OF THE EMBODIMENTS

The present disclosure will be described in more detail with reference to drawings to make objects, technical means and advantages of the present disclosure more apparent.

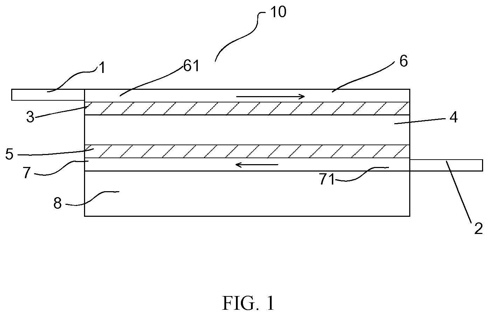

FIG. 1 is a schematic diagram showing a cross section of a magnetic capacitor according to an embodiment of the present invention.

A magnetic capacitor 10 as shown in FIG. 1 includes a substrate 8, and a second conductive region 7, a second magnetic region 5, a dielectric region 4, a first magnetic region 3 and a first conductive region 6 which are sequentially disposed on the substrate 8. The first conductive region 6 includes a first conductive metal layer 61 and a first group of pins 1connected with the first conductive metal layer 61, and the second conductive region 7 includes a second conductive metal layer 71 and a second group of pins 2 connected with the second conductive metal layer 71. In the embodiment of the present invention, the first group of pins 1 includes at least one first pin, and the second group of pins 2 includes at least one second pin. Preferably, the first pins and the second pins have a same number of pins. The dielectric region 4 has a function of storing electric energy, and the first magnetic region 3 and the second magnetic region 5 have a function of preventing leakage of the electric energy.

The dielectric region 4 is a layer of thin film having a thickness not more than 250 nm and is made from a dielectric material such as barium titanate or titanium dioxide. Since the dielectric material is not an ideal insulator, a small amount of current may still pass through the dielectric region. In order to effectively prevent the current from flowing through the dielectric region 4, studies have shown that the leakage of the electric energy can be prevented effectively by setting magnetic pole directions of the first magnetic region 3 and the second magnetic region 5 to be opposite for example.

Each of the first magnetic region 3 and the second magnetic region 5 each is a magnetic thin film, and has two magnetic poles. As shown in FIG. 1, "→" and "←" indicate that magnetic pole directions of the first magnetic region 3 and second magnetic region 5 of the magnetic capacitor 10 are opposite.

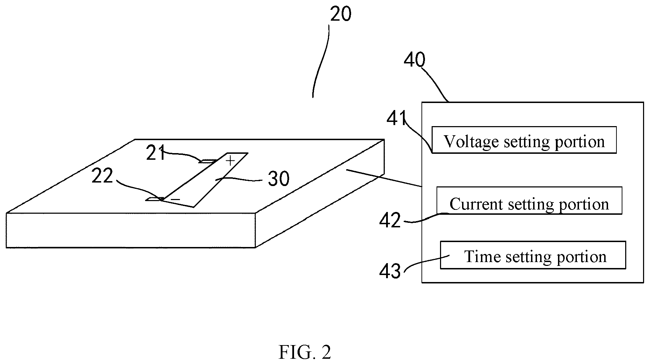

FIG. 2 is a schematic diagram of an activation device according to an embodiment of the present invention.

An activation device 20 shown in FIG. 2 includes a DC voltage source 30, a first group of sockets 21, a second group of sockets 22 and a control unit 40. The first group of sockets 21 is connected with a positive electrode of the DC voltage source 30, the second group of sockets 22 is connected with a negative electrode of the DC voltage source 30, and the first group of sockets 21 and the second group of sockets 22 of the activation device 20 is mated with the first group of pins 1 and second group of pins 2 of the magnetic capacitor 10 respectively. The control unit 40 includes a voltage setting portion 41, a current setting portion 42 and a time setting portion 43. The DC voltage source 30 has at least two output stages, and the output voltage at the output stages is in a range of 0V to 500 V.

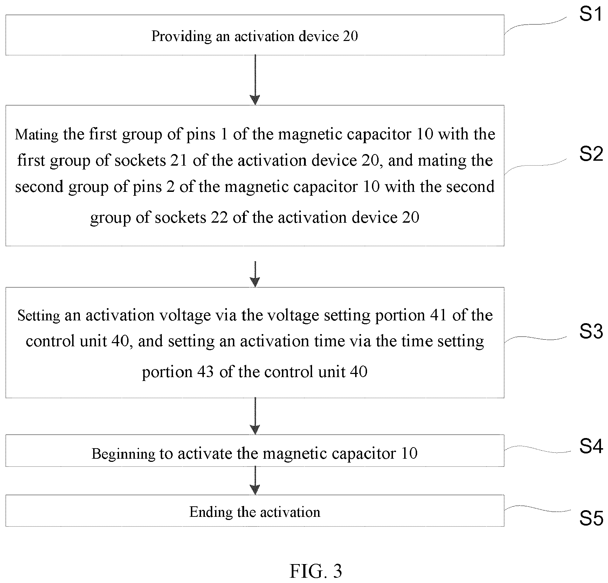

FIG. 3 is a flow chart showing a magnetic capacitor activation process according to an embodiment of the present invention.

As shown in FIG. 3, the activation process of a magnetic energy chip is as follows.

Step S1: providing an activation device 20. The activation device 20 includes a DC voltage source 30, a first group of sockets 21, a second group of sockets 22 and a control unit 40. The first group of sockets 21 is connected with a positive electrode of the DC voltage source 30, the second group of sockets 22 is connected with a negative electrode of the DC voltage source 30, and the first group of sockets 21 and the second group of sockets 22 of the activation device 20 is mated with the first group of pins 1 and second group of pins 2 of the magnetic capacitor 10 respectively. In the embodiment of the present invention, the first group of sockets 21 includes at least one first socket, and the second group of sockets 22 includes at least one second socket. Preferably, the first socket and the second socket have a same number of sockets. The control unit 40 includes a voltage setting portion 41, a current setting portion 42 and a time setting portion 43.

Step S2: mating the first group of pins 1 of the magnetic capacitor 10 with the first group of sockets 21 of the activation device 20, and mating the second group of pins 2 of the magnetic capacitor 10 with the second group of sockets 22 of the activation device 20.

Step S3: setting an activation voltage via the voltage setting portion 41 of the control unit 40, and setting an activation time via the time setting portion 43 of the control unit 40. The activation voltage in the embodiment of the present invention is in a range of 1.5V∼400 V, and the activation time in the embodiment of the present invention is in a range of 10 ms∼10 min.

Step S4: beginning to activate the magnetic capacitor 10. An environmental condition during the activation process is in a range of -50°C ∼150°C.

Step S5: ending the activation.

After Step S4, a step of testing a voltage between the two groups of pins of the magnetic capacitor 10 may be added. A specific operation is: decoupling the magnetic capacitor 10 from the activation device, measuring the voltage between the first group of pins 1 and the second group of pins 2, and ending the activation if the voltage between the first group of pins 1 and the second group of pins 2 is a stable value. Preferably, the stable voltage value is the same as the activation voltage.

The activation in the embodiments of the present invention is substantially different from an ordinary charging. The magnetic capacitor 10 is excited by a DC electric field, and the magnetic poles in the magnetic thin film of the first magnetic region 3 and the magnetic thin film of the second magnetic region 5 move and form an electric field in the magnetic capacitor 10. The main energy stored in the magnetic energy chip is derived from magnetoelectric conversion inside the magnetic capacitor 10 instead of the external energy source. This activation process may be completed in a short period of time. The energy that can be output by the magnetic capacitor 10 after completion of the activation is far larger than the input energy of the activation device.

Take a magnetic capacitor with a size being 4 mm × 5 mm and a GMC being 10 to the power of 11 as an example. The activation is performed by using a 12V DC voltage. After completion of the activation, the magnetic capacitor can store 10 Wh energy. If the activation is performed by using a 72V DC voltage, the activation can be completed in less than one minute. After completion of the activation, the energy stored in the magnetic capacitor is: 10 Wh × (72/12) 2 = 360 Wh. Take a mobile phone used for 10 hours per day as an example. The energy stored in the magnetic capacitor with this specification provides the mobile phone with a power quantity which can be used by the mobile phone for at least one month.

In the whole activation process, the energy storage manner of the magnetic capacitor is based on magnetoelectric conversion of the physical structure, does not involve a redox reaction, and the magnetic energy chip does not contain the chemical electrolyte, thereby it is not apt to cause a degradation phenomenon that the electrolyte concentration in the chemical battery reduces. Therefore, the magnetic capacitor after completion of the activation is confronted with almost zero leakage.

After completion of the activation process, the magnetic energy of the first magnetic region 3 and the second magnetic region 5 is converted into the electric energy, and the magnetic capacitor stores the electric energy to become a magnetic energy chip.

What are described above are only preferred embodiments of the present invention, and not intended to limit the present invention. Any modifications, equivalent substitutes and improvements made within the spirit and principles of the present invention will all fall within the protection scope of the present invention.

## Claims

1. A method for storing electric energy in a magnetic energy chip, wherein the magnetic energy chip comprises a magnetic capacitor, the magnetic capacitor comprises: a substrate, and a second conductive region, a second magnetic region, a dielectric region, a first magnetic region and a first conductive region which are sequentially disposed on the substrate, the first conductive region comprises a first conductive metal layer and a first group of pins, the first conductive metal layer is connected with the first group of pins, the second conductive region comprises a second conductive metal layer and a second group of pins, and the second conductive metal layer is connected with the second group of pins; the method comprises:
providing an activation device which comprises a DC voltage source, a first group of sockets, a second group of sockets and a control unit;
mating the first group of pins of the magnetic capacitor with the first group of sockets of the activation device, and mating the second group of pins of the magnetic capacitor with the second group of sockets of the activation device;
setting activation parameters;
performing an activation operation.

2. The method for storing electric energy in a magnetic energy chip according to claim 1, wherein the first group of pins of the magnetic capacitor comprises at least one first pin, and the second group of pins of the magnetic capacitor comprises at least one second pin.

3. The method for storing electric energy in a magnetic energy chip according to claim 1 or claim 2, wherein the first group of pins of the magnetic capacitor and the second group of pins of the magnetic capacitor have a same number of pins.

4. The method for storing electric energy in a magnetic energy chip according to any one of claims 1-3, wherein the first group of sockets of the activation device comprises at least one first socket, and the second group of sockets of the activation device comprises at least one second socket.

5. The method for storing electric energy in a magnetic energy chip according to any one of claims 1-4, wherein the first group of sockets of the activation device and the second group of sockets of the activation device have a same number of sockets.

6. The method for storing electric energy in a magnetic energy chip according to any one of claims 1-5, wherein the control unit comprises a voltage setting portion.

7. The method for storing electric energy in a magnetic energy chip according to any one of claims 1-6, wherein the control unit further comprises a current setting portion and a time setting portion.

8. The method for storing electric energy in a magnetic energy chip according to any one of claims 1-7, wherein the DC voltage source comprises at least two output stages, and an output voltage of the at least two output stages comprises 0V∼500 V.

9. The method for storing electric energy in a magnetic energy chip according to any one of claims 1-8, wherein the first group of sockets of the activation device is connected to a positive electrode of the DC voltage source, and the second group of sockets is connected to a negative electrode of the DC voltage source.

10. The method for storing electric energy in a magnetic energy chip according to any one of claims 1-9, wherein the activation parameters comprise an activation voltage.

11. The method for storing electric energy in a magnetic energy chip according to any one of claims 1-10, wherein the activation parameters comprise an activation current and an activation time.

12. The method for storing electric energy in a magnetic energy chip according to claim 10, wherein the activation voltage comprises 1.5V∼400 V.

13. The method for storing electric energy in a magnetic energy chip according to claim 11, wherein the activation time comprises 10 ms∼10 min.

14. The method for storing electric energy in a magnetic energy chip according to any one of claims 1-13, wherein the activation operation comprises testing a voltage between the first group of pins of the magnetic capacitor and the second group of pins of the magnetic capacitor.
